**Europäisches Patentamt**

**European Patent Office**

**Office européen des brevets**

(19)

(11) Publication number: **0 100 755**
**A2**

(12) # EUROPEAN PATENT APPLICATION

(21) Application number: **83830156.2**

(22) Date of filing: **27.07.83**

(51) Int. Cl.³: **B 26 D 3/22**
**//A47J47/00**

(30) Priority: **03.08.82 IT 2272082**

(43) Date of publication of application:
**15.02.84 Bulletin 84/7**

(84) Designated Contracting States:
**AT BE CH DE FR GB LI LU NL SE**

(71) Applicant: **Cavalli, Alfredo**
**Via G. Galilei, 9**
**I-20060 Pessano con Bornago (Milan)(IT)**

(72) Inventor: **Cavalli, Alfredo**
**Via G. Galilei, 9**
**I-20060 Pessano con Bornago (Milan)(IT)**

(74) Representative: **Perani, Aurelio et al,**
**c/o JACOBACCI-CASETTA & PERANI S.p.A 7, Via**
**Visconti di Modrone**
**I-20122 Milano(IT)**

(54) **Multi-purpose apparatus for mincing, slicing, dicing or chopping vegetables and food products.**

(57) The apparatus comprises a substantially cylindrical, vertical-axis container (16) divided by a motor-driven rotary disc (42) into upper and lower compartments (50, 52). A cutting tool (62) is fixed to the disc (42) for rotation therewith and extends above the disc itself from its central zone to the periphery. The disc and the tool are carried by a vertical shaft (32) the lower end of which has means (30, 34) for coupling it to a drive shaft (22) which projects upwardly from the bottom of the lower compartment (52). In the upper compartment (50) there is a vertical duct (64) which opens immediately above the path of the tool and through which the products may be introduced and pressed against the upper face of the disc to be cut into small pieces by the tool, for example to be minced, sliced, diced, chopped or shredded, according to the type of tool. The disc (42) has an aperture (68) for allowing the cut products to fall into the lower compartment (52). At least an upper part of the shaft is constituted by a tool hub member (56) which can be separated from the disc (42) and which carries the tool, to allow the replacement of the tool itself without the need to replace the disc.

The shaft (32) and the disc (42) may be separate components and the disc may be keyed to the shaft so as to be slidable thereon.

Means (36, 44) may be provided for adjusting the position of the disc (42) along the shaft (32) in order to adjust the thickness of cut of the products.

FIG. 1

## Multi-purpose apparatus for mincing, slicing, dicing or chopping vegetables and food products

The present invention relates to apparatus for industrial and domestic use for cutting vegetables and other food products into small pieces, for example by mincing, slicing, dicing, chopping or shredding.

More particularly, the invention relates to apparatus of the type comprising a substantially cylindrical, vertical-axis container divided by a motor-driven rotary disc into a pair of compartments, an upper one and a lower one, in which a cutting tool is fixed to the disc for rotation therewith and extends above the disc itself from a central zone thereof to the periphery, the disc and the tool being carried by a vertical shaft the lower end of which has means for coupling with a drive shaft which projects upwardly from the bottom of the lower compartment, in which a vertical duct extends within the upper compartment and opens immediately above the path of the tool, through which duct the products may be introduced and pressed against the upper face of the disc to be cut into small pieces by the tool, and in which the disc has an aperture for allowing the cut products to fall into the lower compartment.

In known apparatus of this type the disc and the tool, which has different forms, form part of a unitary assembly whereby it is necessary to replace the whole of this assembly when it is wished to change from one type of operation to another.

This involves considerable costs in the manufacture of the apparatus which must have as many different assemblies as there are types of tool.

In the case of apparatus for domestic use, the user must acquire a whole assortment of discs, which are rather bulky, each with a different tool. This problem which is even more serious in the food industry where it is necessary to provide a stock of discs, each with a different tool, leads to high costs both of equipping and storage.

The main object of the present invention is to eliminate this disadvantage.

According to the present invention this object is achieved by means of apparatus of the type mentioned at the beginning, characterised in that an upper part of the shaft is constituted by a member which can be separated from the disc and acts as a hub for the tool to allow the replacement of the tool itself without the need to replace the disc.

Preferably the shaft and the disc are constituted by two separate members; the disc is keyed to the shaft so as to be slidable thereon and means are provided for adjusting the position of the disc along the shaft.

This solution allows the apparatus to be made more versatile since it is possible, for each type of tool, or for each type of cut used, to adjust the thickness of the pieces cut by adjustment of the distance of the disc beneath the tool.

Further characteristics of the invention will emerge from a reading of the detailed description which follows, with reference to the appended drawings which illustrate one embodiment, given by way of non-limiting example.

In the drawings:

Figure 1 is a partly vertically sectioned side elevational view of apparatus according to the invention,

Figure 2 is a perspective view of a disc and of one type of tool associated with the disc,

Figure 3 is a similar perspective view of another type of tool and of means for coupling the hub of the tool to the shaft of the apparatus.

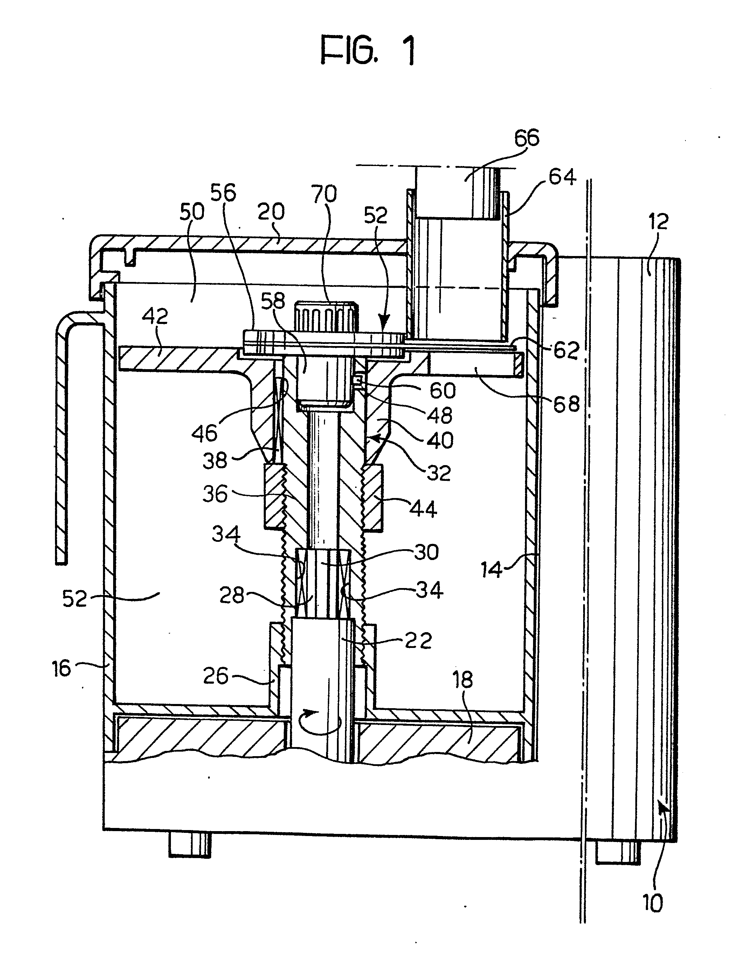

With reference to Figure 1, apparatus according to the invention comprises a body or casing, generally indicated 10, in one part 12 whereof is housed an electric drive motor (not shown).

In the body 10 there is provided a lateral niche or seat 14 in which a container or cup 16 is releasably housed and rests on a base 18 which forms part of the body 10.

The container 16 is substantially cylindrical and has an upper removable lid 20.

A drive shaft 22 projects upwardly from the base 18 and is connected by a transmission (not shown) to the motor housed in the part 12 of the body 10.

The container 16 has a lower central tubular part 26 through which the shaft 22 extends into the container itself.

The shaft 22 has an upper tang 28 with external longitudinal splines 30 which act as keys.

The shaft 22 is surmounted by a vertical tubular shaft 32 the lower part of which is releasably fitted onto the tang 28 and has grooves 34 for coupling with the splines 30.

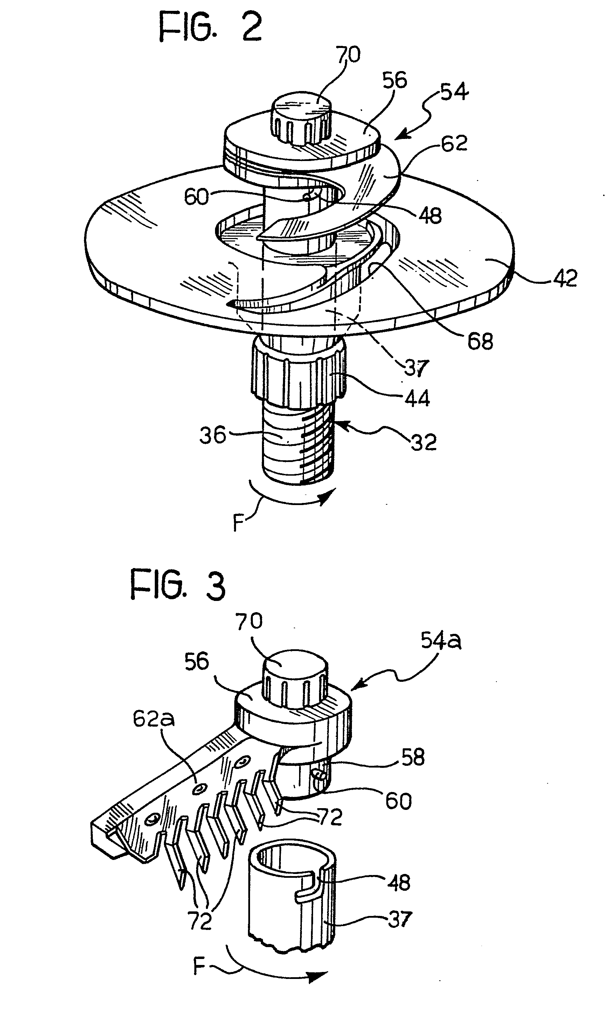

Referring to Figures 1 and 2, the shaft 32 includes an externally threaded lower section 36 and an upper section 37 which is externally smooth, with a longitudinal rib 38 acting as a key.

The hub 40 of a disc 42 with an upper flat surface is fitted onto the smooth section 37.

An internally threaded ring nut 44 is screwed onto the threaded section 36, the lower end of the hub 40 bearing against the annular face of the ring nut. The hub 40 has an internal keyway 46 coupled with the key 38. Thus the disc 42 is keyed for rotation with the shaft 32 but is free to slide vertically therealong.

The upper end of the smooth part 37 of the shaft 32 has an L-shaped notch 48 which constitutes the female part of a bayonet coupling, as is best seen in Figure 3.

The disc 42 divides the interior of the container 16 into an upper compartment 50 and a lower compartment or receptacle 52.

In the upper compartment 50, on the top of the shaft 32, there is releasably keyed a tool, for example that indicated by 54 in Figures 1 and 2. Another type of tool is illustrated in Figure 3 where it is indicated 54a.

Both these tools, and also other types which are not shown, include a hub 56 with a lower cylindrical boss 58 engageable in the top of the shaft 32. The boss 58 has a lateral pin 60 which can be coupled with the notch 48 and constitutes the male part of the bayonet coupling.

The horizontal section of the notch 48 extends rearwardly relative to the sense of rotation of the cutter assembly, indicated by the arrows F in Figures 2 and 3.

The tool 54 of Figures 1 and 2 is of the type with a single arcuate blade 62 parallel to the upper face of the disc 42. This type of tool can be used for example to slice vegetables or small salami.

A duct 64 extends vertically in the lid 20 (Figure 1), its lower opening being very close to the upper face of the blade 62,the vertical position whereof is fixed.

The product  to be cut by means of the blade 62 is introduced into the duct 64 from above and thrust downwardly with a certain degree of force by a presser or piston member 66.  Thus the blade 62, upon each rotation, cuts a slice or piece from the product the thickness of which is equal to the distance between the lower face of the blade 62 and the upper face of the disc 42.  The pieces or slices are discharged into the lower compartment of the receptacle 52 through an aperture or slot 68 in the disc 42.

In order to adjust the thickness of the cut pieces to the desired value, the user removes the cutter assembly comprising the disc 42 and the tool 54 from the container 16 by disengagement of the lower part of the shaft 32 from the tang 28.  Then, the user adjusts the height of the disc 42 by screwing or unscrewing the ring nut 44.  The lower the ring nut 44 the greater is the distance of the disc 42 from the plane of the blade 62 and the thicker are the pieces or slices cut.  Such a lowered position of the disc 42 is indicated in chain lines in Figure 1.

The cut slices are obviously thinner the higher the ring nut 44 and the disc 42.

If the user wishes to change from one type of cutting to another, it is not necessary to remove the disc 42 from the container 16.

The hub 56 has an upper projection 70 acting as a  knob which facilitates the engagement and disengagement of the bayonet coupling 48-60.

By rotating the  knob  70 in the sense F, the user may detach the tool 54 from the shaft 32 and replace it for example by the tool 54a of Figure 3 by the opposite manoeuvre.

In Figure 3, the tool 54a comprises a radial cutting element 62a with comb-like blade tines 72 projecting downwardly. This type of tool is used for cutting products into small sticks or shreds.

For domestic use, most of the components of the apparatus may be made of a plastics material which is suitable for food products, among which are the container 16, the lid 20, the shaft 32, the disc 42 and the hub 56 as well as the duct 64.

For industrial uses, the same components may to advantage be made from stainless steel.

CLAIMS

1. Apparatus for cutting vegetables and food products
into small pieces, for example by mincing, slicing,
dicing, chopping or shredding, of the type comprising:
a substantially cylindrical, vertical-axis container (16)
divided by a rotary disc (42) into upper and lower
compartments (50, 52), a cutting tool (62) fixed
to the disc (42) for rotation therewith and extending
above the disc itself from a central zone to the
periphery thereof, the disc and the tool being carried
by a vertical driven shaft (42) the lower end of which
has means (30, 34) for coupling with a drive shaft (22)
which projects upwardly from the bottom of the lower
compartment (52), in which a vertical duct (64) extends
within the upper compartment (50) and opens immediately
above the path of the tool (62), through which duct the
products may be introduced and pressed against the upper
face of the disc to be cut into small pieces by the tool,
and in which the disc (42) has an aperture (68) for
allowing the cut products to fall into the lower
compartment (52),
characterised in that
at least the upper part of the shaft (32) is constituted
by a tool hub member (56) which carries the tool
(54, 54a) and which is separable from the disc (42) to
allow the replacement of the tool itself without the
need to replace the disc (42).

2. Apparatus according to Claim 1, characterised in that
the hub (56) of the tool (54, 54a) is coupled to the top
of the driven shaft (32) by a bayonet coupling (48, 60).

3. Apparatus according to Claim 1, or Claim 2, charac-
-terised in that the driven shaft (32) and the disc (42)
are two separate components, the disc (42) being keyed
to the shaft so as to be slidable thereon and means (36,
44) being provided for adjusting the position of the
disc (42) along said driven shaft (32).

4. Apparatus according to Claim 3, characterised in that the adjustment means comprise an external screw thread (36) on the lower part of the driven shaft (32) and an internally threaded ring nut (44) coupled to the external thread (36) and supporting the disc (42).

FIG. 1

FIG. 2

FIG. 3